# EUROPEAN PATENT APPLICATION

(11) **EP 3 035 110 A1**
(43) Date of publication of application: **22.06.2016**
(21) Application number: 14198727.1
(22) Date of filing: 18.12.2014
(51) Int. Cl.: G02B 27/09, G02B 27/01, G02B 27/48

(54) **Optical system for avoiding speckle patterns**

(71) Applicant: Optotune AG, 6370 Stans (CH)
(72) Inventor: The designation of the inventor has not yet been filed
(74) Representative: Schulz Junghans Patentanwälte PartGmbB

(57) **Abstract**

The invention relates to an optical system, comprising: a light source (101, 201, 301, 401), particularly a laser, designed to emit a light beam, a light deflector (102, 202, 302, 402), wherein the light source is configured such that said light beam impinges on the light deflector, an exit pupil expander (104, 204, 304, 404) in the form of a lens or mirror array, wherein the light deflector is designed to deflect the light beam onto the exit pupil expander so as to generate a projection image (103, 203, 303, 403) comprising image pixels on the exit pupil expander, wherein the exit pupil expander is designed to diverge the light beam, particularly such that the projection image can be seen by an observer from multiple viewing angles. According to the invention, the optical system comprises an optical device being designed to interact with said light beam such that the light beam comprises a uniform light intensity distribution on the exit pupil expander.

## Description

The invention relates to an optical system, particularly a laser projection system, for avoiding speckle patterns as well as Moire patterns.

Laser speckles are one of the biggest obstacles for laser projection systems. The speckle effect is a result of the constructive and destructive interference of many waves of a coherent laser light resulting in a randomly varying intensity profile of a light projection.

When a surface is illuminated by a light wave, according to diffraction theory, each point on an illuminated surface acts as a source of secondary spherical waves. The light at any point in the scattered light field is made up of waves which have been scattered from each point on the illuminated surface. If the surface is rough enough to create path-length differences exceeding for example one wavelength, giving rise to phase changes greater than 2π, the amplitude, and hence the intensity, of interfering light varies randomly.

In a projection system, two types of speckles can be distinguished, namely subjective and objective speckles. The objective speckles are interference patterns which are generated on a surface. In particular, objective speckles can be seen very well, when laser light has been scattered off a rough surface and then falls on another surface. For example, if a photographic plate or another 2-D optical sensor is located within the scattered light field without a lens, a speckle pattern is obtained whose characteristics depends on the geometry of the system and the wavelength of the laser. The light at a given point in the speckle pattern is made up of contributions from the whole of the scattering surface. The relative phases of these waves vary across the surface, so that the sum of the individual waves varies randomly. The pattern is the same regardless of how it is imaged, just as if it were a painted pattern.

The "size" of the speckles is a function of the wavelength of the light, the size of the laser beam which illuminates the first surface, and the distance between this surface and the surface where the speckle pattern is formed. This is the case because when the angle of scattering changes such that the relative path difference between light scattered from the center of the illuminated area compared with light scattered from the edge of the illuminated area changes by A, the intensity becomes uncorrelated.

The second type of speckles is the so called subjective speckles. Subjective speckles are created when an observer, for example an eye or another imaging system images a coherently illuminated surface. The lenses of the imaging system focus light from different angles onto an imaging point (pixel), resulting in the interference of the light on this point. When the light has a disturbed wavefront, or the imaging system itself introduces a large disturbance of the wavefront, the light interferes positively and negatively, creating additional intensity variations.

A variety of speckle reducing methods have been known all aiming for an averaging of the speckle patterns.

US20080055698, for example, discloses an optical modulator module, including an optical modulator receiving and modulating incident lights, and outputting modulated lights as output lights, and a transparent substrate that is placed on the optical modulator, allowing the incident lights and the output lights to transmit, and that has a phase manipulating pattern formed on an area of a surface of the transparent substrate. With an optical modulator module according to the invention, laser speckles can be reduced.

US2012081786 describes despeckle elements, laser beam homogenizers and methods for despeckling. The despeckle element includes a transparent material having a first surface including a plural number of optical steps and a second surface having a plural number of microlenses. Each of the number of optical steps is in a one-to-one correspondence with at least one of the microlenses. One of the first surface and the second surface is configured to receive collimated light having a coherence length and a remaining one of the first surface and the second surface is configured to pass the collimated light separated into a plurality of beamlets corresponding to the number of microlenses. A height of each step of at least two of the optical steps is configured to produce an optical path difference of the collimated light longer than the coherence length and therefore destroying the coherence of the laser light.

Furthermore, the projection display apparatus of WO2012122677 describes a speckle reducing device for a laser projection. The laser projection system comprises at least a laser light source for emitting laser light and an image generation element, such as a light deflector as a MEMS mirror or a two dimensional intensity modulating array as a digital light processor (DLP), for modulating the laser light into image light. The image light is projected onto a screen through a light outlet to form an image. The speckle reducing device utilizes at least a laser phase disturbing element disposed at a projection path of the laser light between the laser light source and the screen for the laser light passing in a reflective or transmitting mode. At least a phase disturbing pattern is arranged on a surface of the phase disturbing element in order to generate uneven phase change in the laser light passing through the phase disturbing pattern, so that at last the coherence length of the image light emitted from the screen is reduced to effectively reduce speckle.

All prior art systems have the drawback that they rely on the principle of destroying the coherence of the laser light and therefore actively reducing speckles. This is particularly difficult to achieve in point scanning systems, since the perturbation for each image pixel has to be created in an extremely short time.

Furthermore, when (micro) lens arrays are used to suppress speckle patterns, like disclosed in WO2014059552A1 WO2014053562A1 and US2005248849A1 the problem arises that the laser beam having a Gaussian light intensity distribution is likely not to hit exactly the centers of the lenses of the array (each lens represents a pixel of the projected image), but may be a little bit off, resulting in a non-Gauss far field light intensity distribution, which finally can result in unwanted effects such as Moire patterns that significantly deteriorate the quality of the projected image as observed by an observer.

It is therefore an object of the present invention to propose an optical system that suppresses speckle patterns as well as Moire patterns.

To this end, the optical system (e.g. laser projection system) according to the invention comprises:
- a coherent light source, particularly comprising a laser, generating a light beam, wherein particularly said light beam has a non-disturbed wavefront,
- a light deflector (e.g. a MEMS mirror or a two dimensional intensity modulating array such as a digital light processor (DLP) or a liquid crystal on silicon (LCOS), or a transmission based light modulator, e.g. LCD, for modulating the laser light into an image light) which deflects said light beam and/or interacts with it in a way that the light beam impinges on a
- a lens array comprising a plurality of lenses or a mirror array comprising a plurality of mirrors (said arrays are also referred to as exit pupil expander) being designed to diverge the beam, particularly in order to expand the field of view of an observer of the image, wherein the lens array or mirror array is designed to diverge the beam, particularly such that the non-disturbed wavefront of the beam is maintained for each pixel observed by the observer at a given time, wherein
- the light source (e.g. by means of an optical device or several such optical devices, see below) is designed to generate said light beam such that it comprises a uniform light intensity distribution over its cross section and particularly a non-disturbed wavefront before the light beam impinges on the light deflector,
- and wherein the optical system comprises a means for shaping the cross section of said light beam on the lens array, wherein said cross section on the lens array has the same shape and size as a cross section of a single lens (including light blocking apertures if present on the lens array) or as a cross section of several combined adjacent lenses of the lens array together.

Particularly, a uniform light intensity distribution (also denoted as flat top light intensity distribution) is a light intensity distribution where the deviation of the light intensity from the average light intensity within the cross section of the light beam is less than 35% of said average light intensity, particularly less than 20%, particularly less than 15%, particularly less than 10%, particularly less than 5%, particularly less than 2% of said average light intensity.

Particularly, the light source is designed to convert an initial light intensity distribution of the light beam (e.g. a Gaussian light intensity distribution) into said flat-top light intensity distribution while maintaining a wavefront with no or substantially no optical aberrations (non-disturbed wavefront). For this, the light source may comprise an optical device being particularly arranged in the optical path of the light beam before the light deflector.

Particularly, for generating said projection image, the light deflector is designed to change the direction of the beam, wherein particularly the light source is modulated, so that said image pixels are projected one after the other, particularly according to a pre-defined pattern or order, on the lens array, wherein particularly each image pixel is projected onto an associated lens of the lens array.

Particularly, the light source comprises an optical device for giving the light beam said flat top light intensity distribution that may comprise a first aspheric lens and a second aspheric lens (e.g. as described in "Gaussian to flat-top intensity distributing lens", D. Shafer, Optics and Laser Technology, June 1982), wherein the first aspheric lens is designed to deviate the initial (e.g. Gaussian) light intensity distribution of the beam so that the light intensity distribution is a flat-top light intensity distribution after the second aspheric lens, wherein particularly the second aspheric lens deviates the beam so that the output wavefront of the beam is perfect and unaberrated. As known to a person skilled in the art, the amount of asphericity required depends strongly on the separation of the two lenses. The further apart the first and the second lens are, the smaller the necessary asphericity. In case of a multi-color projection system, the optical device may modulate all colors at once or an optical device for each wavelength is employed.

Further, instead of an aspheric first lens and an aspheric second lens facing each other in the direction of the light beam, said optical device may comprise a first afocal doublet lens and a second afocal doublet lens that face each other in the direction of the light beam for generating a flat-top light intensity distribution of the light beam (e.g. out of a Gaussian light intensity distribution).

Of course, the optical device may also be designed to convert a non-Gauss light intensity distribution into a flat-top light intensity distribution with the required shape. Additionally, the optical device may also be designed to convert an initial light intensity distribution of the beam into a flat-top distribution with the required shape in any other way.

Further, in the sense of the present invention, a "non-disturbed wavefront" is a wavefront of a light wave in which all parts of the light wave, which are focused by an imaging system/observer on one area/sensor pixel, have the same or very similar phases at a given time. In particular, the phase difference between the interfering light waves is smaller than one wavelength and in particular smaller than 0.25 wavelengths.

In this way, particularly, the present invention does not aim at removing speckles by using a coherence destroying averaging approach, but to create a speckle free image by maintaining excellent coherence and a non-disturbed wavefront for each image pixel throughout the entire projection systems up to the observer.

In addition, a light beam having a flat-top light intensity distribution over its cross section is used, wherein said cross section has a shape and size equal or similar to the shape of a cross section of an individual lens of the lens array or of several combined adjacent lenses of the lens array together. This means that in case the beam perfectly hits an individual lens of the lens array, the front side of this lens is congruently covered by the cross section of the beam. In case the cross section of the beam comprises the shape and size of the combined cross section of several adjacent lenses, a (simply connected) front side formed by the front sides of said adjacent lenses is congruently covered by the cross section of the light beam when the latter perfectly hits those adjacent lenses of the lens array.

Due to said uniform light intensity distribution and cross section shape and size of the light beam, the far field light intensity distribution generated by the (micro) lens array is not changed significantly when the beam does not perfectly hit the respective area on the lens array (see above) that is associated to a particular image pixel (e.g. the individual lens of the (micro) lens array).

In this way, not only speckle patterns are avoided, but also Moire patterns that are likely to occur when Gaussian light intensity distributions are used, particularly in conjunction with (micro) lens arrays.

Particularly, in detail, speckles are reduced by the optical system according to the invention due to the following mechanism.

The coherent (laser) light is directed onto the light deflector, which deflects the light to create an image. The wavefront of each pixel of the image remains non-disturbed and if imaged by an observer, e.g. an eye, neither objective nor subjective speckles are observed. For most practical projection system, however, it is not possible to send the laser light directly into the observers imaging system but an exit pupil expander is normally required to increase the possible viewing angles. Unfortunately, when coherent light is sent for example through a random diffuser, the wavefront of the laser light is at least partially disturbed and when imaged by the imaging optics of an observer, subjective speckles are created on the imaging sensor. To prevent these unwanted subjective speckles an exit pupil expander in the form of a lens array that does not destroy the wavefront of the laser light while diverging it, such that the image can be seen from multiple viewing angles, is required. One example of such an exit pupil expander is a (micro)lens array that has for example one lens per projected image pixel. When such a pixel is imaged by the observer, no speckles are created in this pixel. Other structures such as (micro) mirror arrays comprising mirrors instead of lenses (or lenses that are configured to function as mirrors), cylindrical (micro)lens arrays which are crossed at 90° (so called cross-cylindrical lenses) with respect to each other, or other structures that do not disturb the wavefront of the light are also possible. The main advantage of such wavefront maintaining structures is the fact that both subjective and objective speckles are prevented to occur without the need of any dynamic system.

Preferably, the wavefront maintaining structure,i.e. the exit pupil expander, is a lens array (e.g. a microlens array) made e.g. out of an injection molded plastic or polymer. In some implementations, the microlens array can have an optional shadowing mask around each microlens. In case a 100% fill factor with no imperfections at the intersections of individual lenses is achieved, the shadowing mask will most likely be omitted.

In another embodiment, the lens array comprises an optical coating which is applied on the microlenses that selectively reflects the wavelengths of the light source and reflects most other wavelengths. Furthermore, a second layer is applied on the lenses of the lens array, wherein said layer consists of a material having the same refractive index as the individual lenses. This allows light with particular wavelengths to be reflected and diverged by the lenses while other wavelengths are transmitted through the lens array without being diverged by the lenses of the lens array. Such a lens array is also denoted as semi-transparent lens array. Particularly, this lens array is configured to reflect and diverge the light beam generated by the light source and to transmit ambient light through the lens array without diverging it.

Particularly, the lens array comprises a plurality of lenses that are arranged side-by-side (particularly without gaps in between them) in a two dimensional array, wherein particularly such an array may comprise a square or hexagonal structure. Particularly, each lens of the array comprises an outer diameter being smaller than one millimeter, in this case the lens array is also denoted a microlens array. In the same sense, a mirror is a micro-mirror in case each mirror comprises an outer diameter being smaller than a millimeter.

According to an embodiment of the present invention, the lens array is a microlens array, i.e., the lenses of the lens array are microlenses.

Particularly, the deflector is designed to deflect the light beam such that each image pixel is projected on an associated lens of the lens array (i.e. each lens of the (micro)lens array represents an image pixel) or on an associated (micro-)mirror of the employed mirror (diffusive structure)

The invention also relates to optical systems in which the light is pre-shaped in front or after the wavefront maintaining lens array.

Further, an embodiment of the present invention may include a light deflector in the form of an MEMS mirror, a two-dimensional intensity modulating array (e.g. such as a digital light processor (DLP)), a liquid crystal on silicon (LCOS), or a transmission based light modulator for modulating the laser light into an image light.

Further, according to a preferred embodiment of the present invention, said means for shaping the cross section of the light beam or the optical device defines an aperture having a circumferential contour (i.e. an edge of the aperture that delimits the aperture), wherein the optical device is designed to pass the converted light beam having the uniform/flat-top light intensity distribution through said aperture so that the beam comprises a cross section delimited by a contour that comprises the shape of said contour of the aperture, and particularly so that the contour of the cross section of the light beam on the lens array has the same shape and size of an outer contour of a cross section of a single lens (including light blocking aperture or edge surface between the lenses) of the lens array or has the same shape and size of an outer contour of a cross section of several combined adjacent lenses of the lens array together.

Particularly, the contour or cross section of the individual lens of the lens array is square, rectangular, or hexagonal.

Further, particularly the contour or cross section of the light beam on the lens array is square, rectangular, or hexagonal (depending on the cross section shape of the lenses of the lens array, see above). The cross section of the light beam can further be composed of several equally shaped units, arranged side by side, wherein such a unit may be square, rectangular, or hexagonal or any other shape that can be combined with the multiple of equally shaped units.

Further explanations and other aspects and features of the present invention will be given below.

The invention will be better understood and objects other than those set forth above will become apparent when consideration is given to the following detailed description thereof. Such description makes reference to the annexed drawings, wherein:
- Fig. 1: depicts a first embodiment of an optical system according to the invention;
- Fig. 2: depicts a second embodiment of an optical system according to the invention;
- Fig. 3: depicts a third embodiment of an optical system according to the invention;
- Fig. 4: depicts a forth embodiment of an optical system according to the invention;
- Figs. 5 and 6: illustrate difficulties arising when a Gaussian light intensity distribution is used in conjunction with a lens array;
- Figs. 7 and 8: illustrate the use of a flat-top light intensity distribution according to the present invention;
- Fig.9: shows a microlens array according to the invention, wherein the individual lenses comprise a rectangular cross section corresponding to the cross section of the converted light beam having a flat-top light intensity distribution;
- Fig. 10: shows a microlens array according to the invention, wherein the individual lenses comprise a hexagonal cross section corresponding to the cross section of the converted light beam having a hexagonal cross section and a uniform light intensity distribution;
- Fig. 11: shows an embodiment of the present invention, wherein a possible design of the optical device for converting the light intensity distribution of the light beam is also indicated;
- Fig. 12: shows a cross section of a beam having a cross section shape corresponding to the cross section shape of several combined adjacent lenses of a lens array;
- Fig. 13: shows a further embodiment, wherein the lens array comprises a layer contacting the micro lenses having the same refractive index as the micro lenses;
- Fig. 14 to 16: show a further embodiment of the present invention; and
- Fig. 17: shows the situation of Fig. 12 wherein the lenses/mirrors now all comprises a circumferential blocking aperture;
- Fig. 18: shows a way of designing a lens array out of elongated cylindrical lenses; and
- Fig. 19: shows an optical device that can be used in all embodiments in order to generate a light beam having a uniform light intensity distribution.

Herein, the term "non-disturbed wavefront" is generally used to describe a light wave that has a not or only minimally perturbed wavefront. In other words, all parts of the light wave, which are focused by an imaging system of an observer on one area at a given time, have the same or very similar phases. In particular, the phase difference between the interfering light waves is smaller than one wavelength and in particular smaller than 0.25 wavelengths.

On the one hand, the invention utilizes the fact that lenses maintain a non-disturbed wavefront of laser light and that light with a non-disturbed wavefront does not generate subjective speckles when focused by an imaging system.

On the other hand, the invention uses an image projecting light beam having uniform (or flat-top) light intensity distribution, wherein the beam comprises a cross sectional shape and size equal or similar to the cross sectional shape and size of a single lens or several lenses on the a lens array. Here, the cross section of the lens or lenses extends parallel to the extension plane of the lens array.. This allows to suppress Moire patterns, which are likely to occur when a light beam with a Gaussian light intensity distribution is used e.g. with a (micro)lens array.

The present invention can be implemented in a variety of forms. In the following, we describe some of these systems.

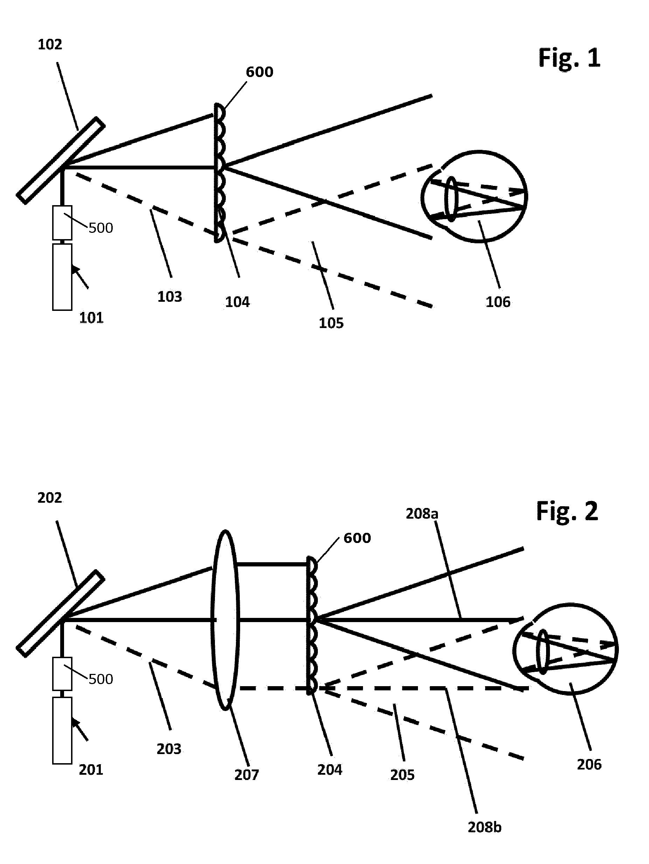

One possible embodiment of the present invention is shown in Figure 1. This embodiment comprises:
A coherent light source 101 creating a non-disturbed wavefront, wherein the initial light intensity distribution of the light is converted to a flat-top contour shaped light intensity distribution by an optical device 500. The light source 101 can be a monochromatic or polychromatic source generated by one laser or multiple laser sources. In case of a multiple laser source system, each wavelength of the light source 101 can have its own optical device 500 or one optical device 500 can be used for all wavelengths of a light source with different wavelengths. An image generating light deflector 102 e.g. a scanning mirror, which deflects the modulated light in one or two dimensions generating a projection image 103. The generated image is then directed onto an exit pupil expander 104 in the form of a lens array.

One example for such a structure is a microlens array. The microlens array ideally has one microlens per pixel of the projection image and the cross section of the light incident on the microlens is the same as the cross section of a single microlens. In this case, each pixel is matched to one microlens. Depending on the focal length of the microlenses, the light of each pixel is diverged into a particular angle creating a diffusive image 105. The diffusive image 105 is then imaged by an observer 106 e.g. an eye. When the imaging system of the observer focuses onto the surface of the exit pupil expander 104 an image of the projection image is created on the image sensor of the observer. Since the microlenses maintain the non-disturbed wavefront of the light of each pixel, each pixel is projected onto the retina without creating speckles. Therefore, the system described in the embodiment allows the observer to see a speckle free image from many viewing angles.

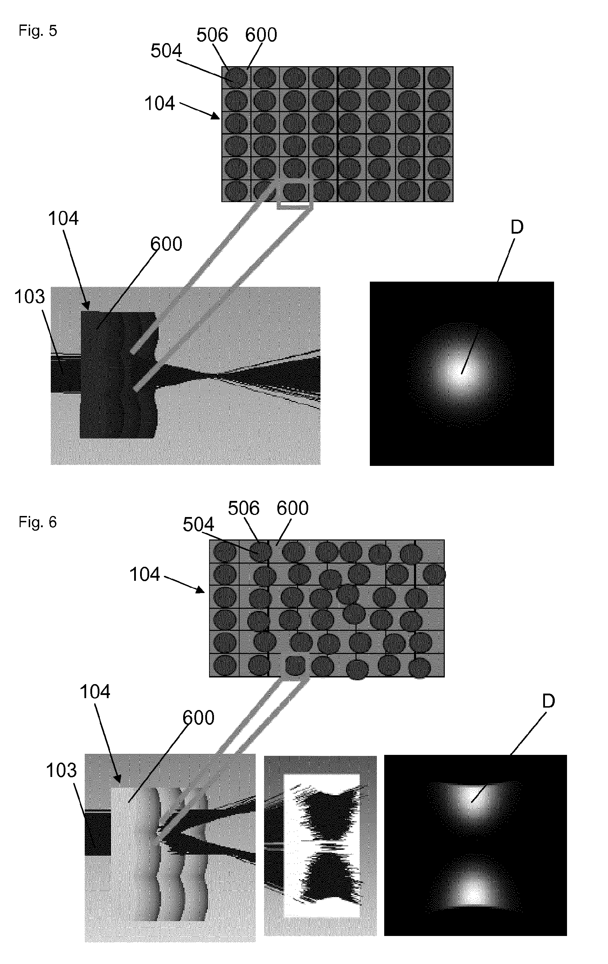

In case now the light beam 103 would comprise a Gaussian light intensity distribution G, each image pixel projected by the light beam 103 (having a cross section 504 and a cross section contour 506) on the respective microlens 600 must exactly hit the center of the associated lens 600 as depicted in Fig. 5. However, in a real world scenario it is not possible to control the light beam 103 with such an accuracy. A more likely scenario is depicted in Fig. 6 according to which the light beam 103 does not hit exactly the center of the respective microlens 600 resulting in a non-Gaussian far field light intensity distribution D which may cause unwanted effects such as Moire patterns. These Moire patterns are especially observed when the projected image 103 has a slightly different periodicity than the microlens array periodicity.

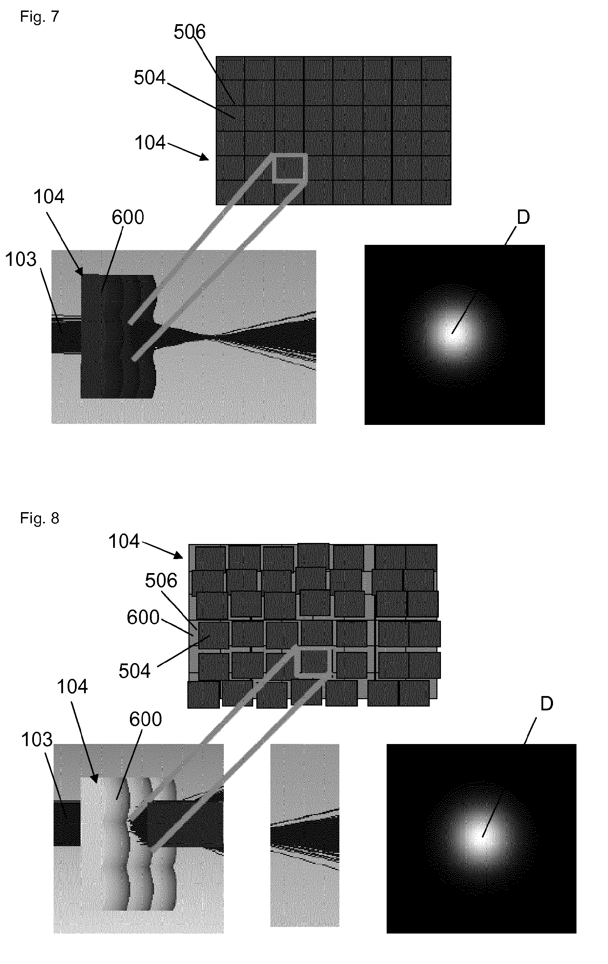

However, since the light beam 103 according to the invention comprises a flat-top light intensity distribution U with the same or similar cross section as a single or several particularly adjacent microlenses 600 according to the invention, which is depicted in Figs. 7 and 8, the far field light intensity distribution D essentially stays the same also when the light beam 103 does not perfectly hit the center of a microlens 600 as shown in Fig. 8, avoiding Moire patterns

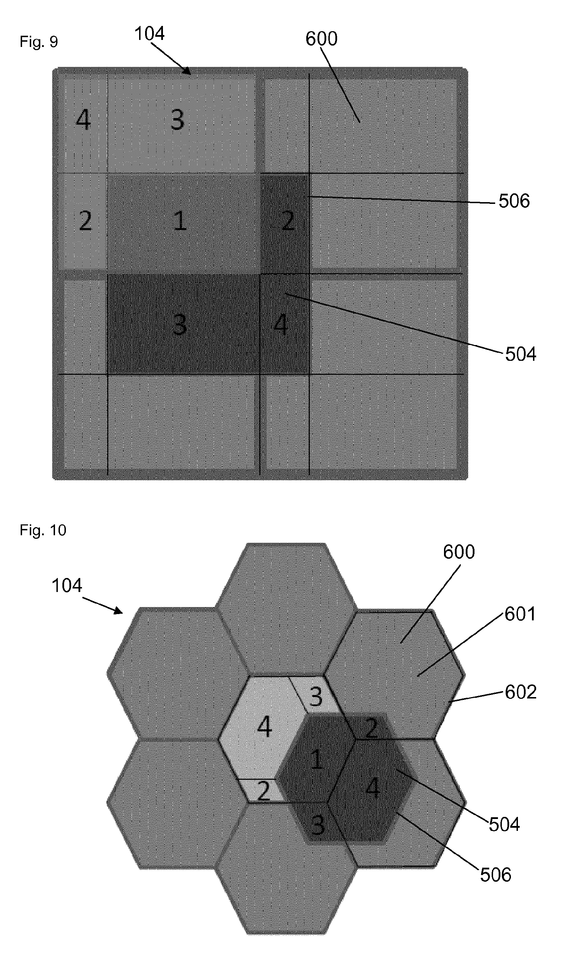

Particularly, as shown in Figs. 9 and 10, the microlenses 600 (having a cross section 601 and a cross section contour 602) and the cross section 504 of the light beam 103 correspond to each other in shape and size. Generally, the microlens 600 (beam cross section 504) can have also other shapes than rectangular (square) as shown in Fig. 9 or hexagonal as shown in Fig. 10.

Due to the fact, that the light intensity distribution is now sufficiently flat over the entire cross section 504 of the light beam 103 the light beam 103 or cross section 504 of the light beam 103 hitting not perfectly the center of the associated lens 600 yields the same far field light intensity distribution as the light beam 103 that hits the center of the associated lens 600. This is mainly due to the fact that each subsection 1', 2', 3', 4' of the illuminated microlenses 600 corresponds to an equal subsection 1, 2, 3, 4 of a single microlens 600 in case the light beam 103 would hit the microlens 600 perfectly centered. Since the light intensity of the light beam 103 is uniform, the same amount of light is deflected in a particular direction by the corresponding subsection 1', 2', 3', 4' of the microlenses 600 in case of a perfectly centered beam and a de-centered beam 103.

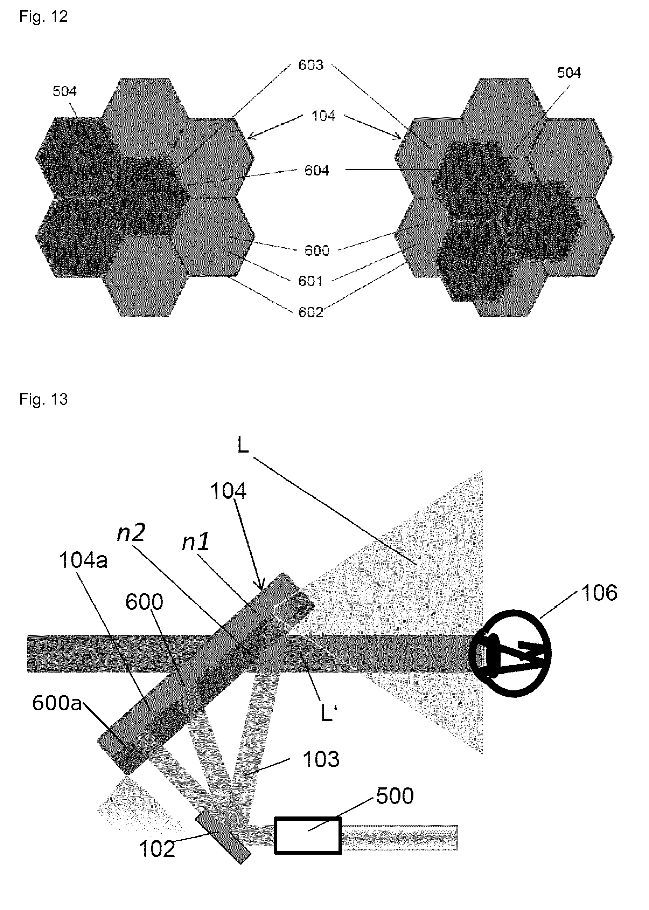

This also holds for the situation depicted in Fig. 12, where the cross section 504 of the light beam 103 on the lens array 104 has the same shape and size as a cross section 603 of several adjacent lenses 600 of the lens array together. Here, the beam has a cross section 504 corresponding to the total cross section 603 of three adjacent hexagonal lenses 600, wherein said cross section 604 is delimited by an outer contour 603.

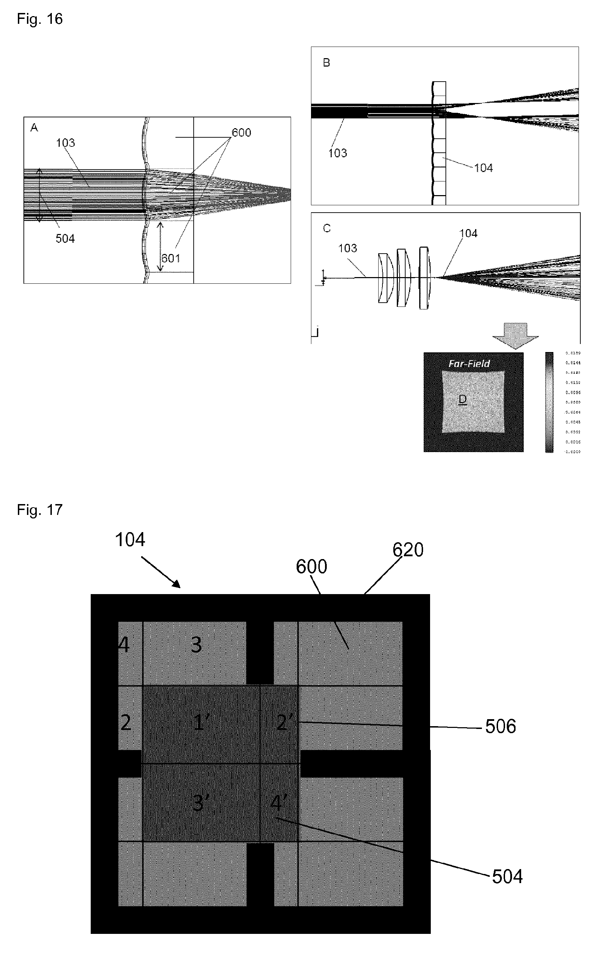

Further, as shown in Fig. 17, the exit pupil expander 104 (e.g. (micro)lens or (micro mirror array) may also comprise a shadowing mask forming a light blocking aperture 620 for each lens/mirror 600 of the respective array. The size of the cross section of the light beam however is not altered due to the presence of such apertures 620 for each lens/mirror 600. Still, the shape and size of the cross section of the light beam 103 corresponds to the cross section of an individual lens/mirror element 600 or several lenses/mirrors 600 (including the light blocking aperture 620 associated to each lens/mirror).

Further, generally, as shown in the embodiment of Fig. 13, a lens array 104 can also be used in a reflection mode. Here, the (micro)lenses 600 have a coating 600a which is reflective for the wavelength of the light beam 103 but transparent for other wavelengths, particularly the ambient light L'. Furthermore a layer 104a that comprises a refractive index n1 that is equal to the refractive index n2 of the lenses 600 of the lens array 104 is applied on the (micro)lenses 600. Such a layer 104a may be achieved by coating the lenses 600. This means that for the light beam 103 (laser light) the layer 600a acts as micro mirrors (that diverge the light beam into divergent light L observed by observer 106) and for the environmental light L' the lens array 104 and layer 104a act as a transparent layer (foil) without any focusing effect on the light L'. Such an exit pupil expander could be built into the windscreen of a car.

Advantageously, the lens array 104 is manufactured using one of the following processes:
a) Casting, in particular injection molding / mold processing
b) Imprinting, e.g. by hot embossing nanometer-sized structures
c) Etching (e.g. chemical or plasma)
d) Sputtering
e) Hot embossing
f) Soft lithography (i.e. casting a polymer onto a pre-shaped substrate)
g) Self-assembly: Magnetic or chemical self-assembly (see e.g. "Surface tension-powered self-assembly of microstructures - the state-of-the-art", R.R.A. Syms, E. M. Yeatman, V.M. Bright, G.M. Whitesides, Journal of Microelectromechanical Systems 12(4), 2003, pp. 387 - 417)
h) Electro-magnetic field guided pattern forming (see e.g. "Electro-magnetic field guided pattern forming", L. Seemann, A. Stemmer, and N. Naujoks, Nano Lett., 7 (10), 3007 - 3012, 2007. 10.1021/n10713373.

The light deflector 102 may consist of a
a) Scanning mirror
b) Digital light processor (DLP)
c) Liquid crystal on silicon (LCOS)
d) Dynamic diffractive optics (e.g. Holographic structure)
e) Transmission based light modulator, e.g. LCD

The lens array 104 may consist of a
a) Refractive structure
b)
d) Reflective structure
on one or both sides of the exit pupile expander (lens array) or integrated in the exit pupile expander (lens array).

The surface of the lens array 104 can e.g. be coated with:
a) an antireflection coating
b) a reflective coating
c) a color filter coating
d) a multi wavelength notch filter and a material having the same refractive index as the diffusive structure material

The material for the exit pupile exander (lens array) 104 can e.g. comprise or consist of:
a) Gels (Optical Gel OG-1001 by Liteway),
b) Elastomers (TPE, LCE, Silicones e.g. PDMS Sylgard 186, Acrylics, Urethanes)
c) Thermoplaste (ABS, PA, PC, PMMA, PET, PE, PP, PS, PVC,...)
d) Duroplast
e) Glass
f) Metal
g) Other Materials with characteristic optical properties (ceramics, liquids)
h) Shadowing apertures
i) combinations thereof

The optical device 500 can consist of
a) Glass lenses (spherical,aspherical, or achromatic)
b) Plastic lenses (spherical or aspherical)
c) Mirrors
d) Shadowing apertures
e) Focusing lenses

A second embodiment of the present invention is shown in Fig. 2. According thereto a coherent light source 201 creates a light beam (e.g. with a non-disturbed wavefront), wherein the initial (e.g. Gaussian) light intensity distribution is converted by an optical device 500 to a uniform (flat-top) intensity distribution U with a particular cross sectional shape (see above). The light source 201 can be a monochromatic or polychromatic source generated by one laser or multiple laser sources. The optical system further comprises an image generating light deflector 202 e.g. a scanning mirror, which deflects the light in one or two dimensions, generating a projection image 203. The generated image is then directed onto a collimation optics 207 which directs the light onto an exit pupil expander204, in particular a microlens array.

The microlens array ideally has one microlens per pixel of the projection image. In this case, each pixel is matched in size to one microlens. Depending on the focal length of the microlenses, the light of each pixel is diverged into a particular angle creating a diffusive image 205. The diffusive image 205 is then imaged by an observer 206 e.g. an eye. When the imaging system of the observer is focused onto the surface of the exit pupil expander 204 an image of the projection image is created on the image sensor of the observer. Since the microlenses maintain a non-disturbed wavefront of the light within each pixel, each pixel is projected onto the retina without creating speckles. Therefore, the system described in the embodiment allows the observer to see a speckle free image from many viewing angles.

The advantage of this embodiment is the fact that the chief rays 208a and 208b of the incidence angle of the light of each image pixel onto the micro-lens array is substantially the same, resulting in an homogeneous light intensity distribution at each possible angular position of the observer 206. Furthermore, the collimation optics 207 also helps to reduce the spot size of each light beam hitting the microlens array and matching the size of the light beam with the size of one or multiple lenses.

Further, since the projecting light beam comprises a uniform light intensity distribution with a cross sectional shape matching the cross sectional shape of the microlens (or several microlenses), Moire patterns are suppressed (see above).

The collimation optics 207 may consist of a
a) refractive lens
b) diffractive lens
c) Fresnel lens
d) Lens stack
e) Mirrors
f) Or a combination of all the above.

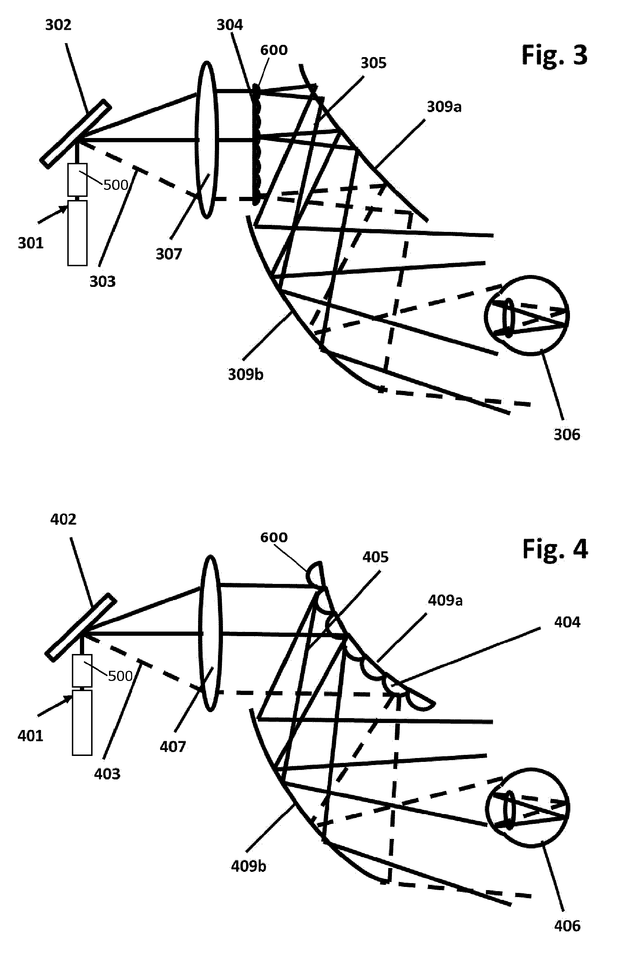

A third embodiment of the present invention is shown in Fig. 3. This embodiment substantially corresponds to the second embodiment, with the exception that a magnifying optics 309 is introduced after the exit pupil expander 304 to adjust the size of the observed image. The magnifying optics can be a lens system or a mirror system or a combination of both.

A forth embodiment of the present invention is shown in Fig. 4. This embodiment substantially corresponds to the third embodiment, with the exception that the diffusive structure 404 is integrated into the magnifying optics 409.

The invention is not limited to the microlens array described for the exit pupil expander. Indeed, other structures could be defined for diffusing the light, while maintaining the non-disturbed wavefront of the light of each pixel and preventing any diffraction artifacts.

The invention also relates to systems in which the light deflector can be a two dimensional intensity modulating array such as a digital light processor (DLP) or an LCOS instead of a scanning mirror.

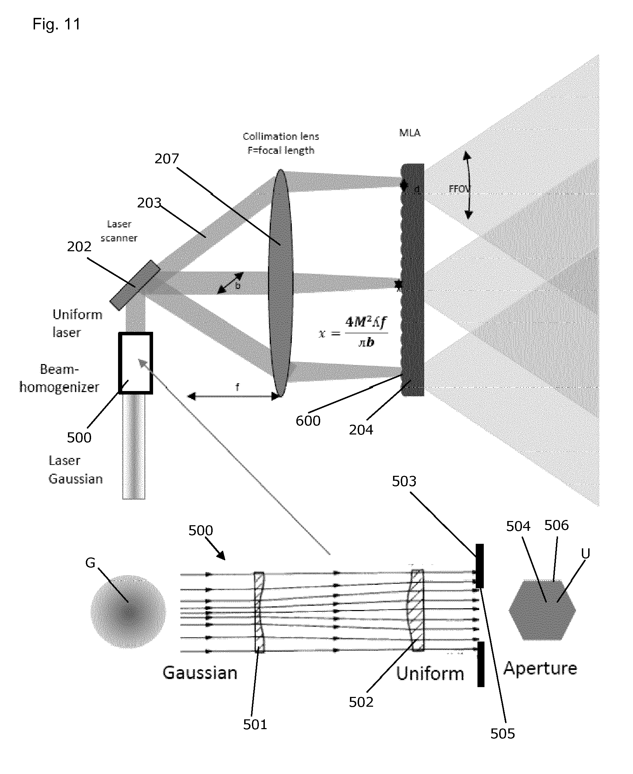

Further, Fig. 11 shows an embodiment according to the invention which essentially corresponds to the embodiment shown in Fig. 1. In addition, a possible design for the optical device 500 is shown.

According thereto, the optical device 500 comprises a first aspheric lens 501 and a second aspheric lens 502 arranged successively in the path of the light beam and facing each other in the direction of the light beam. Further, the optical device 500 has an aperture 503 comprising a hexagonal cross section so that the converted light beam that exits the optical device through said aperture 503 comprises a cross section having a corresponding shape as shown in Fig. 10

While the first lens 501 is designed to change the beam such that it comprises a flat-top light intensity distribution, the further second lens 502 serves for collimating the beam.

Of course other optical devices 500 may also be used for making a flat-top light intensity distribution with a particular cross section.

The optical system can be used in a large variety of applications, such as:
- Macro- and micro-projectors for home or professional displays
- Head-up displays
- Laptop/mobile projectors
- TV-projectors
- Business projectors
- Head-mounted displays

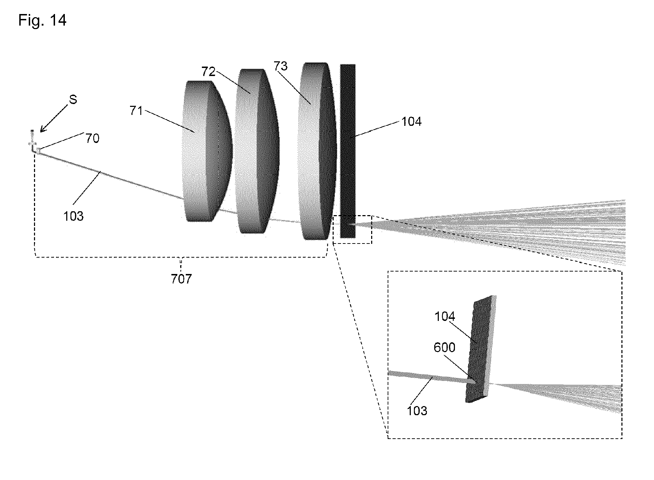

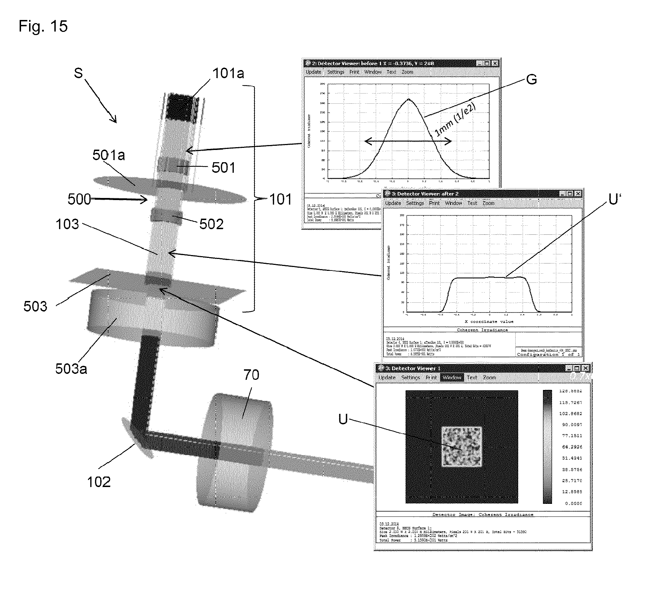

Finally, Figs. 14 to 16 show a further embodiment of the present invention in the form of a head-up diplay (HUD), wherein said HUD comprises an assembly S shown in Fig, 15 comprising a coherent light source 101 having a laser 101 a for generating a light beam, an optical device 500, an aperture 503, a focusing lens 503a and light deflector 102 (e.g. a scanning mirror). The initial light intensity distribution G of the light is a Gaussian and is converted to a uniform (so called flat-top) contour shaped light intensity distribution by the optical device 500 of the light source 101, which optical device 500 is arranged behind the laser 101 a in the optical path of the light beam 103. The light source 101 can be a monochromatic or polychromatic source comprising one laser 101 a or even multiple laser sources. Said optical device 500 of the light source 101 that serves for generating a uniform light intensity distribution U out of the Gaussian light intensity distribution G comprises a first lens 501 and a second lens 502 as shown in Fig. 11 as well as a circular aperture 501 between the two lenses 501, 502. Further, said aperture 503 is configured for shaping the cross section 504/contour 506 of the light beam 103 having the uniform light intensity distribution U and is arranged in the optical path of the light beam 103 behind the second lens 502 of the optical device 500. By means of the aperture 503, the light beam gets a cross section 504 that has the same shape and size as a cross section 601 of a single lens 600 or as a total cross section 603 of several adjacent lenses 600 of the lens array 104 as described herein. Here, as an example, the cross section 504 of the light beam 103 on the lens array 104 is a square as shown in Figs. 15 and 16 and has the shape and size corresponding to a cross section 601 of a single lens 600 of the array 104. Due to the uniform light intensity distribution U and the shape and size of the cross section 504 of the beam with respect to the cross section 601 of the lenses 600 of the lens array (cf. Fig. 16, panel A), the far field intensity distribution of the light 103 as shown in panel C of Fig. 16 will be substantially the same, even in case the light beam 103 does not hit a lens 600 of the lens array in its center as shown in panel B of Fig, 16, but impinges on two lenses 600 at the same time. After passing said aperture 503 the light beam 103 is focused by the focusing lens 503a onto the image generating light deflector 102, e.g. a scanning mirror, which deflects the time modulated light 103 in one or two dimensions generating a projection image 103 on the lens array 104. The lens array 104 has the optical property to maintain the non-disturbed wavefront for each pixel. The microlens array 104 ideally has one microlens 600 per pixel of the projection image 103. Again, depending on the focal length of the microlenses 600, the light of each pixel is diverged into a particular angle creating a diffusive image which can be imaged by an observer, e.g. an eye, that is not shown in Fig. 14 to 16. When the imaging system of the observer focuses onto the surface of the lens array 104 an image of the projection image is created on the image sensor of the observer. Since the microlenses 600 maintain the non-disturbed wavefront of the light of each pixel, each pixel is projected onto the retina without creating speckles. Therefore, the system described in the embodiment allows the observer to see a speckle free image from many viewing angles.

Further, the optical system according to the invention shown in Fig. 14 to 16 comprises four lenses 70, 71, 72, 73 arranged in the optical path of the light beam 103 between the scanning mirror 102 and the lens array 104. These lenses 70, 71, 72, 73 form a telecentric lens system for making sure that the chief-ray-angle of each pixel is substantially the same and the image observed by an observer has the same intensity over the entire image.

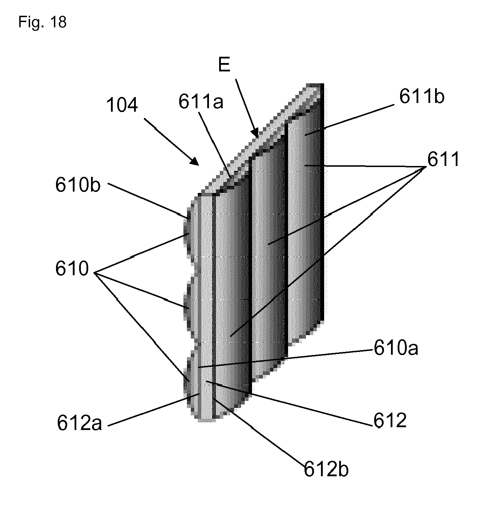

Further, Fig. 18 shows a way of obtaining a lens array 104 using a first plurality of elongated cylindrical lenses 610 extending parallel with respect to each other as well as a second plurality of elongated cylindrical lenses 611 extending also parallel with respect to each other. Here, the cylindrical lenses 610, 611 of the first and second plurality further extend along a common extension plane E, wherein the cylindrical lenses 610 of the first plurality cross the cylindrical lenses 611 of the second plurality, particularly at an angle of 90°, respectively. Here, the cylindrical lenses 610 of the first plurality each comprise a flat side 610a that is joined to a first (flat) surface 612a of a central layer 612 of the exit pupil expander that extends along said extension plane (E), and wherein also the cylindrical lenses 611 of the second plurality are joined with their flat sides 611a to a second (flat) surface 612b of the central layer 612, wherein the first surface 612a faces away from the second surface 612b. The convex surfaces 610b of the cylindrical lenses 610 of the first plurality face away from the convex surfaces 611 b of the cylindrical lenses 611 of the second plurality.

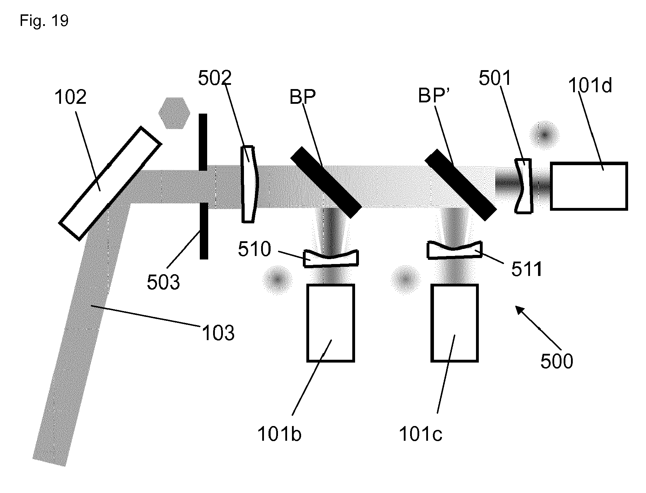

Finally, Fig. 19 shows an optical device 500 that can in principle be used in all embodiments in order to generate a light beam having a uniform light intensity distribution and a defined cross sectional shape as described herein after passing aperture 503.

According thereto, the optical device 500 comprises a first aspheric lens 501 and a second aspheric lens 502 arranged successively in the path of the light generated by a first laser 101 d (e.g. red light), wherein the two lenses 501, 502 face each other in the direction of the laser light from said first laser 101 d. Further, the optical device 500 has an aperture 503 arranged behind the second lens 502 comprising an e.g. hexagonal cross section so that the converted light beam 103 that exits the optical device 500 through said aperture 503 comprises a cross section having a corresponding shape as shown in Fig. 10. Furthermore, laser light from a second laser 101b (e.g. blue light) and laser light from a third laser 101c is coupled into the path of the laser light from the first laser 101 d via a homogenizing lens 510, 511 and a bandpassfilter BP, BP', respectively.

Here, the three different wavelengths of the laser light from the different lasers 101 d, 101b, 101c share a common collimation lens 502 in front of the aperture 503 that forms the cross section of the final light beam 103 leaving the optical device 500 (the light beam 103 is then deflected by means of the light deflector 102 as described herein), but each wavelength has its own homogenizing lens 501, 510, 511.

Alternatively, one may use a separate optical device 500 (e.g. like the one in Fig. 11) for each wavelength.

While there are shown and described presently preferred embodiments of the invention, it is to be distinctly understood that the invention is not limited thereto but may be otherwise variously embodied and practiced within the scope of the following claims.

## Claims

1. An optical system, comprising:
- a light source (101, 201, 301, 401), particularly comprising a laser, designed to generate a light beam (103, 203, 303, 403),
- a light deflector (102, 202, 302, 402), wherein the light source is configured such that said light beam impinges on the light deflector,
- an exit pupil expander, particularly a lens array or a mirror array, (104, 204, 304, 404), comprising a plurality of lenses (600) or mirrors (600), wherein the light deflector is designed to deflect the light beam onto the exit pupil expander so as to generate a projection image (103, 203, 303, 403) on the exit pupil expander, wherein the exit pupil expander is designed to diverge the light beam,
**characterized in that**
the light source (101, 201, 301, 401, 500) is designed to generate said light beam such that the light beam (103, 203, 303, 403) has a uniform light intensity distribution over its cross section on the exit pupil expander, wherein the deviation of the light intensity from the average light intensity within said cross section is less than 35% of said average light intensity, and wherein the optical system comprises a means (503) for shaping the cross section (504) of said light beam (103, 203, 303, 403) on the exit pupil expander (104, 204, 304, 404), wherein said cross section (504) of the light beam on the exit pupil expander
- has the same shape and size as a cross section (601) of a single lens (600) or mirror (600) of the exit pupil expander, or
- has the same shape and size as a cross section (603) of several lenses (600) or mirrors (600) of the lens array.

2. The optical system as claimed in claim 1, **characterized in that** the deviation of the light intensity from the average light intensity within said cross section (504) of the light beam is less than 20%, particularly less than 15%, particularly less than 10%, particularly less than 5%, particularly less than 2% of said average light intensity.

3. The optical system as claimed in claim 1 or 2, **characterized in that** the lensesof the exit pupil expander are arranged side-by-side in a two dimensional array, wherein particularly the shapes and sizes of the lenses (600) are equal, or **in that** the mirrors (600) of the exit pupil expander are arranged side-by-side in a two dimensional array, wherein particularly the shapes and sizes of the mirrors (600) are equal.

4. The optical system as claimed in one of the preceding claims, **characterized in that** the lenses (600) of the exit pupil expander in the form of said lens array are formed by a first plurality of elongated cylindrical lenses (610) extending parallel with respect to each other and a second plurality of elongated cylindrical lenses (611) extending parallel with respect to each other, and wherein the cylindrical lenses (610, 611) of the first and second plurality extend along a common extension plane (E) wherein the cylindrical lenses (610) of the first plurality cross the cylindrical lenses (611) of the second plurality, particularly at an angle of 90°, respectively, and wherein particularly the cylindrical lenses (610) of the first plurality are applied with their flat (610a) sides to a first surface (612a) of a central layer (612) extending along said extension plane (E), and wherein particularly the cylindrical lenses (611) of the second plurality are applied with their flat sides (611 a) to a second surface (612b) of the central layer (612), wherein the first surface (612a) faces away from the second surface (612b).

5. The optical system as claimed in one of the preceding claims, **characterized in that** said means (503) for shaping said cross section (504) of the light beam on the exit pupil expander comprises or is formed as an aperture (503) having a circumferential contour (505), wherein the optical device is designed to pass the light beam having said uniform light intensity distribution through said aperture (503) so that the light beam comprises a cross section (504) on the exit pupil expander delimited by a contour (506) that comprises the shape of said contour (505) of the aperture (503).

6. The optical system as claimed in claim 5, **characterized in that** the contour (506) of the cross section (504) of the light beam on the exit pupil expander has the same shape and size of an outer contour (602) of a cross section (601) of a single lens of the exit pupil expander or of a single mirror (600) of the exit pupil expander, or has the same shape and size of an outer contour (604) of a cross section (603) of several lenses of the exit pupil expander or of several mirrors (600) of the exit pupil expander.

7. The optical system as claimed in one of the preceding claims, **characterized in that** the optical system comprises a collimation optics (207, 307, 407, 707) that is designed to redirect the projection image (103, 203) onto the exit pupil expander such that the chief rays (208) for each image pixel are each incident onto the exit pupil expander (104, 204) under an angle, wherein said angles do not deviate from each other by more than 25°, particularly by more than 10°, particularly by more than 5°, particularly by more than 2°.

8. The optical system according to claim 7, **characterized in that** the collimation optics (207,307, 407, 707) is configured to adjust the size of the cross section of the light beam, particularly to the size of the cross section of a single lens (600) of the exit pupil expander or of a single mirror (600) of the exit pupil expander, or to the size of the cross section of several lenses of the exit pupil expander or of several mirrors of the exit pupil expander.

9. The optical system according to claim 7 or 8, **characterized in that** the collimation optics (207, 307, 407) comprises at least a refractive, diffractive or reflective optical element.

10. The optical system according to one of the preceding claims, **characterized in that** the system comprises a magnifying optics (309, 409) that is designed to change the size of the image on the exit pupil expander (304, 404) as observed by an observer (306, 406).

11. The optical system as claimed in claim 10, **characterized in that** the exit pupil expander, particularly in the form of the lens array (304, 404), is integrated into the magnifying optics (309, 409).

12. The optical system according to one of the preceding claims, **characterized in that** said lenses or mirrors of the exit pupil expander (104, 204, 304, 404) are made of or comprise one of the following materials: a polymer, a plastic, a glass, a crystal, or a metal.

13. The optical system according to one of the preceding claims, **characterized in that** said exit pupil expander (104, 204, 304, 404) comprises a light blocking mask forming an aperture (620) for each lens (600) or mirror (600) of the exit pupil expander.

14. The optical system according to one of the preceding claims, **characterized in that** the optical system is configured such that all parts of a light wave of said light beam, which are focused by an imaging system/observer (106, 206, 306, 406) on a certain area or sensor pixel, have the same or very similar phases at a given time, wherein particularly the phase difference between the interfering light waves of the light beam is smaller than one wavelength, particularly smaller than 0.25 wavelengths.

15. The optical system according to one of the preceding claims, **characterized in that** the exit pupil expander, particularly in the form of the lens array or in the form of the mirror array (104, 204, 304, 404) is reflective, transmissive or semi-transparent.

16. The optical system according to one of the preceding claims, **characterized in that** the light source comprises an optical device (500) for generating said uniform light intensity distribution of the light beam, wherein said optical device comprises at least a lens, particularly two lenses (501, 502), or wherein said optical device comprises at least a mirror, wherein particularly the optical device (500) comprises at least one aperture (503) for shaping the light beam.

17. The optical system according to one of the previous claims, **characterized in that** the light source is configured to generate the light beam such that the latter comprises different wavelengths, wherein particularly said optical device (500) is configured to shape the cross section of the light beam and/or to give the light beam said uniform light intensity distribution for all wavelengths of the light source, or wherein particularly the optical system comprises a separate optical device for each wavelength, wherein each optical device is designed to shape the light of the wavelength that is associated to the optical device (500) and/or to give said light of the respective wavelength said uniform light intensity distribution.

18. The optical system according to one of the previous claims, **characterized that the** magnifying optics (309, 409) is at least transmissive, diffractive or reflective.

19. The optical system according to one of the previous claims, **characterized that the** light deflector is a mirror or a two dimensional intensity modulating array.
